# FASCICULE DE BREVET EUROPEEN

(11) **EP 2 183 491 B1**
(45) Date de publication et mention de la délivrance du brevet: **18.12.2013**
(21) Numéro de dépôt: 08826418.9
(22) Date de dépôt: 11.07.2008
(51) Int. Cl.: F16B 2/06, F16L 37/088, F16L 33/03, F16L 33/02

(54) **DISPOSITIF DE MISE EN PLACE D'UN COLLIER DE SERRAGE SUR UNE PIECE A SERRER ET SYSTEME DE SERRAGE A DECLENCHEMENT AUTOMATIQUE UTILISANT UN TEL DISPOSITIF**
VORRICHTUNG ZUM ANORDNEN VON EINEM KLEMMRING AUF EINEM TEIL UND AUTOMATISCH AUSGELÖSTES KLEMMSYSTEM MIT EINER SOLCHEN VORRICHTUNG
DEVICE FOR PUTTING A CLAMPING COLLAR INTO PLACE ON A PART TO BE CLAMPED AND AUTOMATIC TRIGGERED CLAMPING SYSTEM USING SUCH A DEVICE

(30) Priorité: 12.07.2007 FR 0756441
(43) Date de publication de la demande: 12.05.2010
(73) Titulaire: Etablissements Caillau, 92130 Issy-les-Moulineaux (FR)
(72) Inventeur: RIGOLLET, Nicolas, F-41200 Romorantin (FR); PREVOT, Fabrice, F-41130 Selles Sur Cher (FR); ROINTRU, Tony, F-41210 Marcilly En Gault (FR)
(74) Mandataire: Intès, Didier Gérard André
(86) Numéro de dépôt international: PCT/FR2008/051305
(87) Numéro de publication internationale: WO 2009/010698

(56) Documents cités:
- EP-A- 0 175 808
- WO-A-99/09344
- FR-A- 2 738 616
- GB-A- 885 227
- GB-A- 2 371 574
- US-A- 1 694 664

## Description

La présente invention concerne un dispositif de mise en place d'un collier de serrage sur une pièce à serrer. L'invention concerne également un système de serrage comprenant un collier de serrage ayant une ceinture apte à adopter une configuration de repos dans laquelle le diamètre de cette ceinture est réduit pour le serrage et une configuration expansée dans laquelle le diamètre de la ceinture est augmenté pour permettre la mise en place du collier autour d'une pièce à serrer, la ceinture pouvant passer de sa configuration expansée à sa configuration de repos par une déformation élastique.

Un collier de serrage de ce type est très simple à utiliser puisque, à partir de sa configuration expansée, il suffit de permettre son passage vers sa configuration de repos pour que le serrage soit automatiquement réalisé.

Par exemple, le collier est formé dans un matériau en bande formant ressort, qui est enroulé sur lui-même de manière à présenter deux extrémités qui se chevauchent axialement et qui sont aptes à être déplacés l'une par rapport à l'autre pour réduire la longueur de chevauchement et amener le collier de sa configuration de repos à sa configuration expansée. Dans ce cas, on place le collier dans sa configuration expansée en maintenant ses deux extrémités pour qu'elles soient à la distance appropriée l'une de l'autre et, pour réaliser le serrage, on relâche ces extrémités pour que le collier parvienne dans sa configuration de repos.

En général, le maintien du collier dans sa configuration expansée est réalisé en maintenant les deux extrémités du collier, par exemple à l'aide d'un outil du genre pince ou bien à l'aide d'une agrafe amovible. Le document FR 2738616 dévoile un tel collier, voir en particulier la figure 10. Une fois que le collier est en place autour du ou des objets à serrer, l'opérateur doit dégager l'outil ou ôter l'agrafe, pour permettre le passage du collier dans sa configuration de repos.

Il peut s'avérer délicat de correctement placer le collier autour du ou des objets à serrer, tout en le maintenant dans sa configuration expansée.

L'invention vise à faciliter la pose du collier, en proposant un dispositif de mise en place d'un collier de serrage et un système de serrage qui facilite la mise en place du collier autour du ou des objets à serrer et le passage du collier de sa configuration expansée dans sa configuration de repos, une fois que le collier est en place autour du ou des objets à serrer.

Dans ce but, selon l'invention, le dispositif de mise en place d'un collier comprend une bague de support apte à être ceinturée par le collier et un écarteur apte à coopérer avec ladite bague pour, dans une première position relative de l'écarteur et de la bague, maintenir la bague dans une configuration expansée dans laquelle le collier ceinturant la bague est également dans une configuration expansée dans laquelle le diamètre du collier est augmenté pour permettre la mise en place de ce dernier autour de la pièce à serrer et pour, dans une deuxième position relative de l'écarteur et de la bague, permettre le rétreint de la bague.

Le but précité est également atteint avec le système de serrage de l'invention grâce au fait qu'il comporte, outre le collier de serrage précité, un dispositif de mise en place du collier, comprenant une bague de support apte à être ceinturée par le collier et un écarteur apte à coopérer avec ladite bague pour, dans une première position relative stable de l'écarteur et de la bague, maintenir la bague dans une configuration expansée dans laquelle le collier ceinturant la bague est également dans sa configuration expansée et pour, dans une deuxième position relative de l'écarteur et de la bague, permettre le rétreint de la bague et le serrage du système de serrage sous l'effet de l'effort de rappel élastique exercé par le collier ceinturant la bague.

Ainsi, pour mettre en place le collier, on dispose celui-ci autour de la bague de support, alors que cette dernière est maintenue dans sa configuration expansée par l'écarteur. La première position relative de l'écarteur et de la bague de support est stable, c'est-à-dire que, sans sollicitation extérieure, ces deux éléments restent naturellement dans cette position, nécessaire au maintien du collier en configuration expansée. Pour réaliser le serrage, il suffit alors de mettre en place autour du ou des objets à serrer l'ensemble comprenant le collier, la bague de support et l'écarteur qui peut être manipulé comme un tout, puis de faire passer l'écarteur et la bague dans leur deuxième position relative, de manière à permettre le serrage.

Avec l'invention, le collier ne ceinture pas directement le ou les objets à serrer (il n'est pas à son ou leur contact direct), mais il ceinture la bague de support et serre le ou les objets par l'intermédiaire de l'effort de serrage qu'il impartit à cette bague en la contraignant à se rétreindre.

Avantageusement, la bague de support et l'écarteur sont aptes à être déplacés axialement l'un par rapport à l'autre pour passer de l'une à l'autre desdites première et deuxième positions relatives, ce déplacement axial étant de préférence opéré dans le sens d'une pénétration de l'écarteur à l'intérieur de la bague.

Un tel déplacement axial peut être opéré de manière simple et aisé.

Avantageusement, pour serrer un assemblage de deux pièces emmanchées l'une dans l'autre, la bague de support et l'écarteur présentent chacun une surface de butée apte à coopérer respectivement avec chacune des deux pièces de telle sorte qu'un déplacement relatif desdites pièces pour leur emmanchement, alors que le système de serrage est disposé autour de l'une de ces pièces, provoque le passage de la première position relative à la deuxième position relative de la bague de support et de l'écarteur. Ces deux surfaces de butée sont de préférence des épaulements, respectivement prévus sur la bague de support et sur l'écarteur.

Dans ce cas, le déplacement qui sert à faire passer la bague et l'écarteur de leur première position relative à leur deuxième position relative peut être opéré dans la continuité du mouvement d'emmanchement des deux pièces qui sont serrées à l'aide du collier. En particulier, grâce aux surfaces de butée précitées, le système de serrage de l'invention peut être disposé autour de l'une des deux pièces en étant calé axialement par rapport à cette pièce lors de l'emmanchement des deux pièces. A l'issue, de cet emmanchement, les deux pièces ne peuvent plus se déplacer l'une par rapport à l'autre, mais en continuant à les déplacer l'une par rapport à l'autre dans le sens de l'emmanchement, on provoque le passage de la première à la deuxième position relative de la bague et de l'écarteur, et on provoque donc le serrage du collier.

Avantageusement, pour serrer un assemblage de deux pièces emmanchées l'une dans l'autre, l'un des deux éléments formés par la bague de support et par l'écarteur présente une portion de maintien apte à être disposée sur l'une des deux pièces de l'assemblage pour permettre le maintien du système de serrage par rapport à cette pièce, avant son assemblage avec l'autre pièce. Cette portion de maintien permet de réaliser un pré-assemblage du système de l'invention avec l'une des deux pièces, avant la connexion des deux pièces. Ainsi, la pièce en question et le système de serrage pré-assemblés peuvent être transportés et manipulés comme un tout, avant l'emmanchement des deux pièces.

Avantageusement, la bague de support comporte au moins un secteur de paroi axiale délimité par une fente axiale et l'écarteur comporte au moins une tête d'écartement apte à être insérée dans ladite fente pour écarter les bords de cette dernière et maintenir la bague dans sa configuration expansée.

Dans ce cas, avantageusement, la fente présente un tronçon large et un tronçon étroit disposés l'un à la suite de l'autre en direction axiale, et la tête d'écartement est apte à coopérer avec le tronçon étroit pour maintenir la bague dans sa configuration expansée et à coopérer avec le tronçon large pour permettre le rétreint de la bague.

Les surfaces de contact entre la fente axiale et la tête d'écartement sont orientées de manière à maintenir stable la configuration expansée de la bague. En particulier, ces surfaces sont orientées axialement.

Il est également avantageux que la tête d'écartement soit formée sur une patte axiale qui présente une portion amincie apte à coopérer avec le tronçon étroit de la fente lorsque la tête d'écartement coopère avec le tronçon large.

Dans ce cas, la bague de support et l'écarteur peuvent être imbriqués l'un dans l'autre, avec la ou les têtes d'écartement de l'écarteur disposées dans la ou les fentes axiales de la bague de support. Un simple déplacement axial relatif de la bague de support et de l'écarteur permet de déplacer la tête d'écartement par rapport à la fente de manière à autoriser le passage de la bague dans sa configuration de rétreint.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la figure 1 est une vue en perspective d'un système de serrage selon l'invention montrant la bague de support, l'écarteur et le collier séparés les uns des autres, selon un premier mode de réalisation ;
- la figure 2 est une vue en perspective du système de serrage, alors que le collier (représentés en traits interrompus) est disposé autour de la bague de support qui est maintenue en configuration expansée par l'écarteur ;
- la figure 3 est une vue en coupe axiale dans le plan III de la figure 2, montrant le même système de serrage dans la même position, alors que l'extrémité d'un tuyau est insérée dans l'écarteur ;
- la figure 4 est une vue analogue à la figure 2, montrant une situation dans laquelle la bague de support et l'écarteur sont dans leurs deuxième positions relatives, de sorte que la bague est dans sa configuration de rétreint ;
- la figure 5 est une vue correspondant à la figure 3, pour la même configuration du système que sur la figure 4 ;
- la figure 6 est une vue en coupe dans le plan VI-VI de la figure 5 ;
- la figure 7 est une vue de l'ensemble bague de support-écarteur selon un exemple pour le premier mode de réalisation ;
- la figure 8 est une vue partielle en perspective correspondant à la figure 2, pour un deuxième mode de réalisation ;
- la figure 9 montre, en perspective, l'écarteur utilisé dans ce deuxième mode de réalisation ;
- la figure 10 est une vue partielle en perspective montrant le système de serrage du deuxième mode de réalisation dans la même configuration que sur la figure 4 ;
- la figure 11 est une vue de l'ensemble bague de support-écarteur selon un exemple pour le deuxième mode de réalisation ;
- la figure 12 montre, en perspective coupée dans un plan diamétrale, l'ensemble bague de support-écarteur selon un troisième mode de réalisation ; et
- la figure 13 montre l'ensemble selon ce troisième mode de réalisation, avec un collier (en traits interrompus) alors que le collier est à l'état serré.

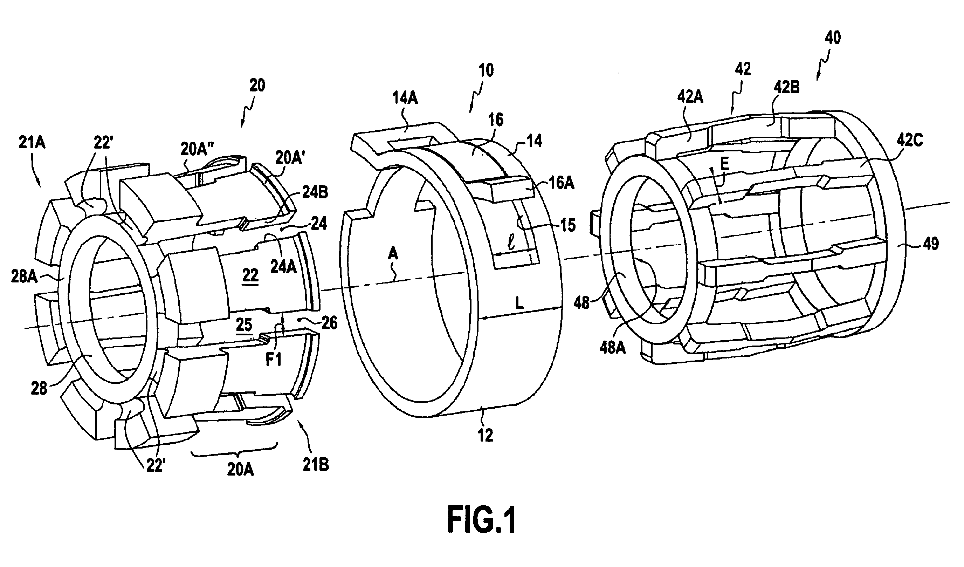

Sur la figure 1, on voit un collier de serrage 10 qui comporte une ceinture 12 enroulée sur elle-même sur plus d'un tour et deux extrémités, 14 et 16, qui se chevauchent axialement. En d'autres termes, il existe au moins une coupe dans un plan contenant l'axe A de la ceinture (cet axe définissant la direction axiale), dans lequel une telle coupe vient en intersection avec chacune des deux extrémités 14 et 16. En l'espèce, la partie d'extrémité 14 a une largeur correspondant à la largeur L du collier, mesurée parallèlement à l'axe A, mais présente une fente intérieure 15, tandis que la partie d'extrémité 16 a une largeur qui correspond à la largeur I de la fente intérieure 15 et pénètre donc dans cette fente. Les extrémités libres 14A et 16A de ces parties d'extrémité 14 et 16 sont légèrement relevées par rapport à la surface cylindrique définie par la ceinture 12. Dans sa configuration de repos (représentée sur la figure 1), le diamètre de la ceinture 12 du collier est réduit. Pour faire passer cette ceinture dans sa configuration expansée, il faut rapprocher les deux extrémités libres 14A et 16A l'une de l'autre, de manière à augmenter le diamètre interne de la ceinture.

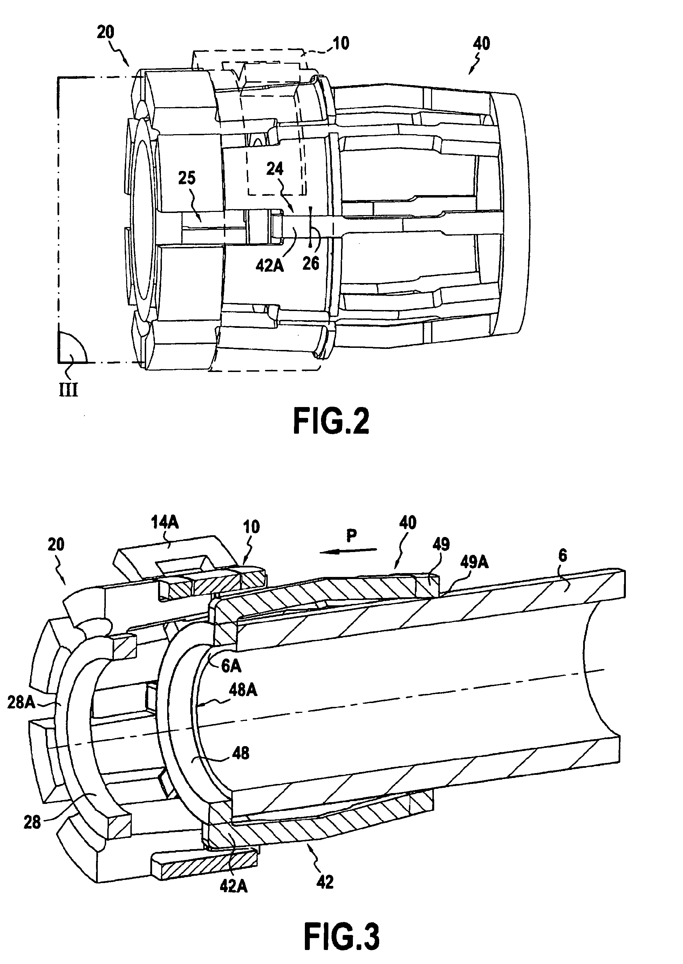

Le système de serrage représenté sur la figure 1 comporte encore une bague de support 20 et un écarteur 40. Comme on le comprend mieux en considérant les figures 2 et 3, la bague de support est apte à être ceinturée par le collier. Plus précisément, elle présente une zone cylindrique 20A autour de laquelle le collier peut être disposé. Pour favoriser le calage axial du collier par rapport à cette bague, cette zone cylindrique est délimitée à chacune des deux extrémités opposées par des épaulements, respectivement 20A' et 20A". On voit que la bague de support 20 comporte plusieurs secteurs de paroi axiale 22 qui sont délimités par des fentes axiales 24.

De son côté, l'écarteur 40 comporte des pattes axiales 42 portant des têtes d'écartement 42A dont l'épaisseur E, mesurée dans la direction circonférentielle autour de l'axe A, est supérieure à la plus petite dimension F1 de la largeur d'une fente 24, également mesurée selon la direction circonférentielle. En considérant les figures 2 et 3, on voit que lorsqu'une tête d'écartement 42A est insérée dans une fente 24, cette tête d'écartement peut ainsi écarter l'un de l'autre les bords 24A et 24B de cette fente, pour augmenter le diamètre de la bague 20. En d'autres termes, l'insertion d'une tête d'écartement 42A dans une fente 24 peut provoquer l'expansion de la bague de support 20.

En l'espèce, cette bague 20 comporte huit secteurs angulaires de paroi axiale identiques entre eux, qui sont séparés par huit fentes axiales identiques entre elles, une fente axiale étant disposée entre deux secteurs adjacents. De même, l'écarteur 40 comporte huit têtes d'écartement 42A réparties angulairement en correspondance avec la répartition angulaire des fentes 24 de la bague 20. Ainsi, lors d'un déplacement axial relatif de la bague 20 et de l'écarteur 40, les têtes d'écartement 42 peuvent être insérées dans les fentes 24 pour écarter les bords en regard de cette dernière, et maintenir ainsi la bague en configuration expansée.

Il convient ici de relever que, même s'il est avantageux de prévoir que les fentes de la bague et les têtes d'écartement soient régulièrement réparties angulairement, on pourrait prévoir une autre répartition.

De même, pour répartir l'effort de serrage, il est avantageux que la bague de support comporte plusieurs secteurs de paroi axiale. Toutefois, elle ne pourrait ne comporter qu'un seul secteur de paroi axiale s'étendant sur légèrement moins de 360°, une fente étant ménagée entre ces deux extrémités en regard. Dans ce cas, l'écarteur aura une tête d'écartement apte à venir à écarter cette fente pour maintenir la bague dans sa configuration expansée.

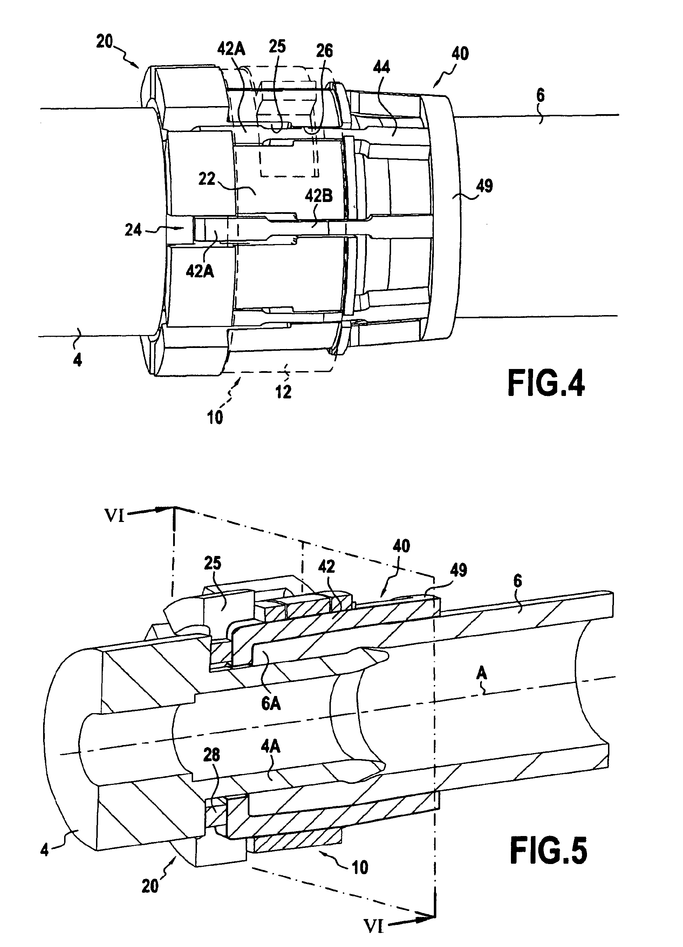

On voit sur les figures que les fentes 24 présentent chacune un tronçon large 25 et un tronçon étroit 26 qui sont disposés l'un à la suite de l'autre en direction axiale. Sur les figures 3 et 4, les têtes d'écartement 42A coopèrent avec les tronçons étroits 26 des fentes axiales 24 et maintiennent ainsi la bague 20 dans sa configuration expansée. Les surfaces en contact entre ces tronçons étroits 26 et les têtes d'écartement sont choisies pour que ce contact soit auto-stable. En particulier, comme on le voit sur les figures, ces surfaces sont purement axiales. Elles sont par ailleurs suffisamment longues pour générer les forces de frottement suffisantes à l'auto-stabilité précitée. On pourrait choisir de les équiper localement de moyens d'encliquetage complémentaires pour générer un point dur, maintenant leurs positions relatives correspondant à la première position relative de la bague et de l'écarteur. Sur les figures 4 et 5, l'écarteur et la bague de support ont été déplacés axialement l'un par rapport à l'autre de sorte que les têtes d'écartement sont parvenues dans les tronçons larges 25 des fentes 24 ce qui a permis à la bague 20 de se resserrer sous l'effet de l'effort de serrage exercé par le collier qui ceinture la portion 20A de cette bague. Plus précisément, sur les figures 4 et 5, ce sont des portions amincies 42B des pattes axiales 42 qui se trouvent dans les tronçons étroits 26 des fentes 24, de sorte que ces tronçons amincies ne s'opposent pas au passage de la bague dans sa configuration restreinte.

Ainsi, dans l'exemple représenté, c'est par un simple déplacement axial, c'est-à-dire par une translation opérée parallèlement à l'axe A de la ceinture du collier que le système de serrage peut être activé. En effet, ce déplacement axial fait passer la bague de support et l'écarteur de leur première position relative à leur deuxième position relative, dans laquelle la bague n'est plus écartée, de sorte que la ceinture du collier peut être ramenée élastiquement vers sa configuration de repos en provoquant le rétreint de la bague. Bien entendu, les largeurs relatives des portions étroites 26 des fentes 24 et des portions amincies 42B des pattes 42 sont déterminées pour que ces pattes ne s'opposent pas au rétreint de la bague sur une amplitude suffisante pour permettre le serrage du collier.

On pourrait prévoir que les fentes aient une seule portion dont les bords seraient écartés par la présence, entre eux, des têtes d'écartement, et que le déplacement relatif de la bague et de l'écarteur fasse sortir les têtes d'écartement de ces fentes.

Les différents secteurs de paroi axiale 22 de la bague sont reliés les uns aux autres par un anneau de liaison 28 situé du côté 21A de la bague opposée à son côté opposé 21B par lequel les têtes d'écartement 42 sont insérées dans les fentes 24. On relève d'ailleurs, que, en l'espèce, ces fentes débouchent axialement sur ce côté 21B, pour favoriser l'insertion des têtes d'écartement dans ces fentes.

La face radiale de cet anneau 28 qui est tournée vers le côté 21A de la bague forme une surface de butée 28A (un épaulement) pour une pièce telle qu'un embout 4 sur lequel un tuyau 6 doit être emmanché. Plus précisément, comme on le voit sur la figure 5, cet embout 4 présente un tronçon d'extrémité 4A qui est emmanché à l'intérieur de l'anneau 28, tandis qu'un épaulement externe de cet embout vient en butée contre l'épaulement 28A, du côté opposé à l'extrémité libre 21B de la bague 20.

On remarque que la bague 20 présente des évidements 22' dans la zone de liaison des secteurs de paroi 22 à l'anneau 28, ce qui augmente la flexibilité de cette liaison et favorise le pivotement de ces secteurs de paroi lors du passage de la configuration expansée à la configuration de rétreint de la bague.

On voit par ailleurs sur la figure 5 que les portions amincies 42B des pattes 42 se sont fléchies vers l'axe A sous l'effet de l'effort de serrage exercé par le collier.

De son côté, l'écarteur 40 comporte également un anneau 48 auquel sont reliés les pattes axiales 42, dans la région de leurs têtes d'écartement 42A. Sur son côté tourné vers l'arrière dans le sens P de la pénétration des têtes d'écartement dans les fentes 24, cet anneau 48 présente une surface de butée 48A apte à coopérer avec l'extrémité libre 6A d'un tuyau 6 inséré à l'intérieur de l'écarteur. On comprend ainsi que, lors du mouvement d'emmanchement du tuyau sur la partie terminale 4A de l'embout, le tuyau et l'embout 40 entraînent avec eux l'écarteur 40 et la bague de support 20 dans leur déplacement axial relatif. Ainsi, cet emmanchement provoque le déplacement axial de l'écarteur 40 et de la bague de support 20 qui cause le passage de leur première position relative à leur deuxième position relative. En principe, l'embout 4 peut être fixe en position, tandis que c'est le tuyau 6 qui est déplacé dans le sens P d'une pénétration de l'écarteur à l'intérieur de la bague.

Il est avantageux que le système de serrage de l'invention soit "embarqué" à l'extrémité d'une des deux pièces de l'emmanchement. En l'espèce, c'est à l'extrémité du tuyau 6 que l'ensemble constitué par l'écarteur 40, le collier 10 et la bague de support 20 est "embarqué", c'est-à-dire que l'écarteur 40, le collier 10 et la bague de support 20 assemblés entre eux sont pré-assemblés avec le tuyau en étant portés par son extrémité.

A cet effet, l'écarteur 40 présente une portion de maintien 49 qui est disposée sur le tuyau pour permettre le maintien du système de serrage par rapport à ce tuyau, avant l'assemblage du tuyau sur l'embout. En l'espèce, la portion de maintien 49 est formée dans une région de l'écarteur 40 qui est opposée aux têtes d'écartement 42A. Il s'agit en particulier d'un deuxième anneau 49, dont le diamètre interne est adapté au diamètre externe du tuyau, en étant éventuellement légèrement inférieur à ce diamètre externe, pour permettre que, à l'issue du mouvement d'emmanchement du tuyau dans l'écarteur 40, cet écarteur soit maintenu autour du tuyau, sans pouvoir se déplacer aisément par rapport à lui.

Ainsi, pour réaliser la mise en place, on peut disposer le collier 10 autour de la portion 20A de la bague 20 et mettre en place l'écarteur en insérant les têtes d'écartement 42A dans les portions étroites 26 des fentes 24. Ce mouvement peut être facilité si l'on maintient le collier en configuration expansée. On insère ensuite l'extrémité du tuyau 6 à l'intérieur de l'écarteur, jusqu'à ce que son bout libre 6A vienne en butée contre la surface de butée 48A. On obtient ainsi un tuyau pré-équipé par le système de serrage selon l'invention, avec lequel il peut être livré aux assembleurs auxquels il suffit d'emmancher cet ensemble sur un embout 4 en exerçant une force de poussée axiale d'emmanchement suffisamment élevée pour provoquer le déplacement de l'écarteur 40 dans le sens d'emmanchement par rapport à la bague 20, de manière à faire échapper les têtes d'écartement 42A aux portions étroites 26 des fentes 24.

En l'espèce, les deux extrémités axiales opposées de l'écarteur sont respectivement formées par les anneaux 48 et 49. Les pattes axiales 42 s'étendent entre ces deux anneaux et présentent successivement, dans le sens allant de l'anneau 49 vers l'anneau 48, une base d'attachement 42C relativement large, la portion amincie 42B précitée et la tête d'écartement 42A, reliée à l'anneau 48. Il convient de relever que les têtes d'écartement sont reliées à la périphérie externe de l'anneau 48, de sorte que la surface d'épaulement 48A définit un diamètre inférieur à celui qui est défini par un cylindre inscrit dans la périphérie interne des têtes d'écartement 42A. En revanche, les bases d'attachement 42C définissent, par leur périphérie interne, un cylindre ayant sensiblement le même diamètre que l'anneau 49. On relève toutefois que l'anneau 49 présente, sur son bord libre 49A, une arête inclinée vers l'intérieur (en se rapprochant de l'axe A), de manière à favoriser son ancrage sur la périphérie externe du tuyau 6.

On relève que les fentes axiales 24 s'étendent au moins sur le tronçon axial 20A de la bague de support 20 qui est recouvert par la ceinture du collier lorsque ce dernier ceinture la bague ; le tronçon large 25 de la fente axiale s'étend même au-delà de ce tronçon axial 20A. En réalité, les fentes axiales 24 traversent axialement la bague 20 de part en part, et sont également traversantes radialement sur la quasi intégralité de leur longueur, à l'exception de leur partie d'extrémité à laquelle se trouve l'anneau 28.

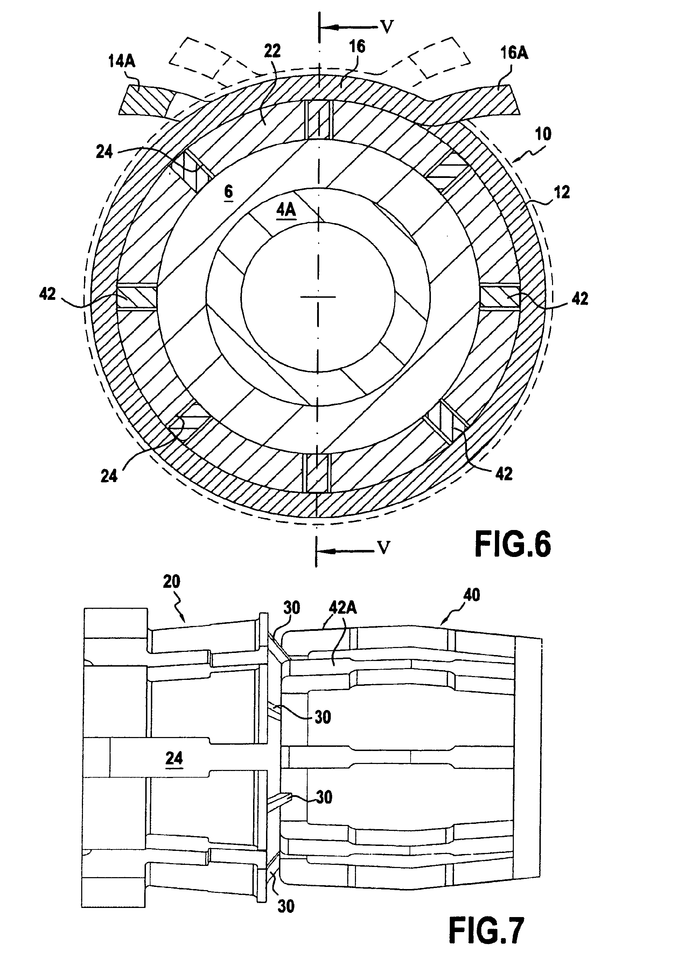

Sur la figure 6, on voit bien les huit pattes axiales 42 de l'écarteur 40, qui sont chacune situées dans une fente 24 de la bague de support 20. Ainsi, un secteur de paroi axiale 22 de cette bague s'étend entre deux pattes 24 consécutives. En l'occurrence, les têtes d'écartement sont dans les portions larges des fentes (voir figure 5) de sorte que le collier peut être dans sa position de serrage. On a indiqué en traits interrompus l'allure du collier lorsqu'il est en configuration expansée, c'est-à-dire alors que les têtes d'écartement 42A sont dans les portions étroites des fentes.

On remarque sur cette figure que les périphéries axiales internes des portions amincies 42B des pattes 42 et des secteurs de paroi 22 sont au contact du tuyau 6 lorsque le collier est serré. Dans la mesure où la largeur des portions amincies des pattes est adaptée à la largeur des portions étroites des fentes (au jeu près permettant l'efficacité du serrage), l'appui du système de serrage sur le tuyau est ainsi quasi-continu.

On a précédemment décrit la bague de support 20 et l'écarteur 40 sous la forme de deux pièces distinctes. Comme le montre la figure 7, ces deux éléments peuvent toutefois être réalisés en une seule et même pièce. Ainsi, sur la figure 7, on voit une bague 20 et un écartement 40 analogues à ceux des figures précédentes, qui sont reliés par des pattes de liaison 30. La pièce constituée par la bague 20, les pattes de liaisons 30 et l'écarteur 40 peut être réalisée en moulage de matière plastique par injection. Pour réaliser l'assemblage de l'écarteur 40 et de la bague de support 20 en vue de maintenir la bague dans sa configuration expansée, les têtes d'écartement 42 doivent être introduites dans les portions étroites des fentes axiales 24. Pour ce faire, les pattes de liaison 30 peuvent être soit cassées, soit fléchies axialement. Il peut en effet s'agir de simples voiles de liaison flexibles, de longueur suffisante. On remarque que les pattes de liaison 30 ont notamment pour avantage de pré-positionner les têtes d'écartement 42A en registre avec les fentes 24.

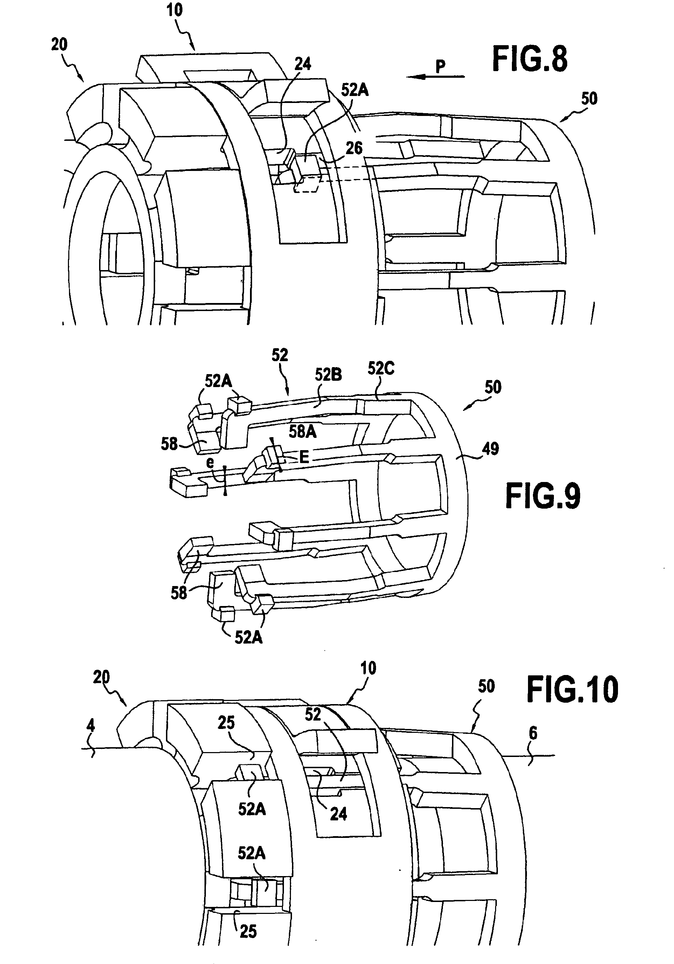

En référence aux figures 8 à 11, on décrit maintenant le deuxième mode de réalisation de l'invention. Le collier 10 et la bague de support 20 sont identiques aux éléments correspondants utilisés dans le premier mode de réalisation. L'écarteur 50 diffère très légèrement de l'écarteur 40. En particulier, comme on le voit sur la figure 9, les pattes axiales 52 s'étendent vers l'avant, c'est-à-dire dans le sens de la pénétration de ces pattes à l'intérieur des fentes 24 de la bague 20, à partir de l'anneau 49 identique à l'anneau 49 de l'écarteur 40 des figures 1 à 7. La largeur e (mesurée dans la direction circonférentielle) de ces pattes 50, sur toute la partie de leur longueur qui est destinée à venir dans les fentes, correspond tout au plus sensiblement à la plus petite largeur F1 des fentes 24. Ainsi, la portion amincie 52B s'étend sur la quasi-intégralité de la longueur des pattes à l'exception, en l'espèce, des portions de base d'attachement 52C par lesquelles les pattes sont attachées à l'anneau 49. Les têtes d'écartement 52A sont quant à elles formées par des plots larges portés par les extrémités avant des pattes 52. Ces plots ont une largeur E mesurée dans le sens circonférentiel supérieure à la largeur e précitée, ce qui leur permet de maintenir cette bague dans sa configuration expansée lorsqu'ils sont dans les portions étroites des fentes 24 de la bague 20. Par ailleurs, on constate que les plots font également saillie radialement par rapport à la périphérie externe des pattes 52. Ainsi, comme on le comprend notamment en considérant la figure 8, ce sont les plots 52A qui sont disposés contre les bords des fentes 24 lorsque les têtes d'écartement sont insérées dans ces fentes tandis que la périphérie externe des pattes 52 se trouve sensiblement au niveau de la périphérie axiale interne de la bague 20. Dans ce deuxième mode de réalisation, la surface de butée 58A de l'écarteur 50 est formée sur la face radiale interne des extrémités libres 58 des pattes 52 opposées à l'anneau 49, ces extrémités libres étant recourbées radialement vers l'intérieur. Considérées ensemble, les extrémités libres recourbées 58 des pattes 50 définissent des portions d'anneau, dont la face interne définit la surface de butée 58A pour l'extrémité libre du tuyau destinée à être insérée à l'intérieur de l'écarteur 50. De manière générale, la surface de butée de l'écarteur servant de butée axiale à l'une des deux pièces devant être emmanchées l'une dans l'autre est avantageusement formée sur au moins une portion d'anneau de l'écarteur situé dans la région de la tête de l'écartement. De même, la surface de butée de la bague de support servant de butée à l'autre pièce de l'assemblage, est avantageusement formée sur au moins une portion d'anneau de la bague de support située au voisinage d'une extrémité du secteur de paroi axiale opposée à l'écarteur.

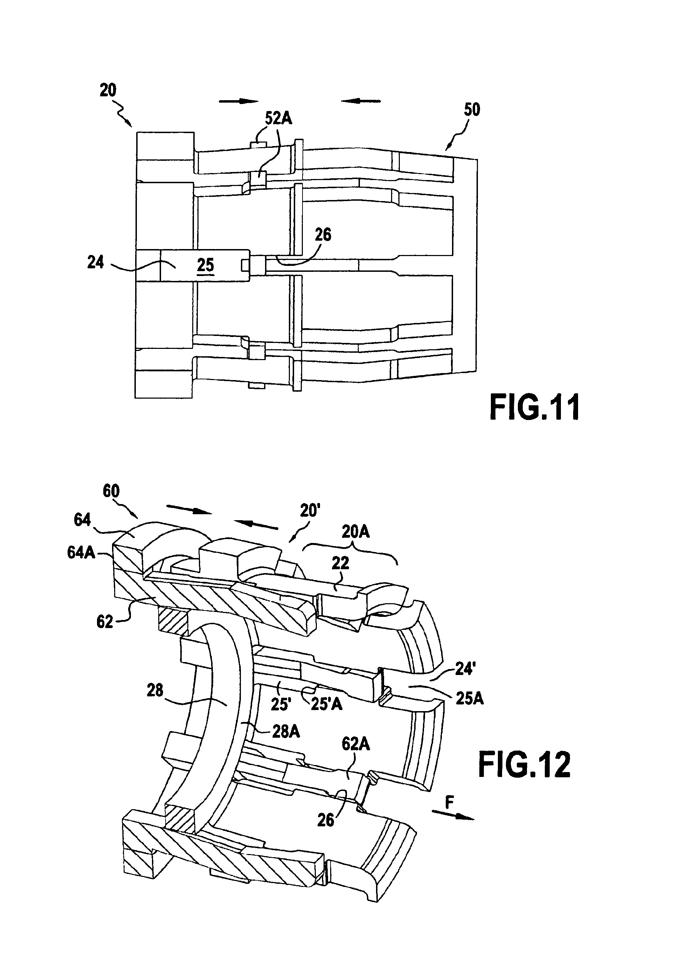

La figure 8 montre le système de serrage selon le deuxième mode de réalisation, alors que la bague 20 est maintenue dans sa configuration expansée par l'écarteur, les têtes d'écartement 52A étant situées dans les portions étroites 26 des fentes 24. Sur la figure 10, la bague et l'écarteur ont été déplacés dans le sens d'une pénétration accrue des têtes d'écartement dans les fentes 24. Les têtes d'écartement 52A sont alors parvenues dans les tronçons larges 25 des fentes 24, ce qui a permis à la bague 20 de se rétreindre sous l'effet d'effort élastique de serrage du collier, de manière à permettre le serrage de l'assemblage des deux pièces à l'aide du système de serrage. On remarque que le tronçon large 25 de la fente axiale 24 s'étend au-delà du tronçon axial 20A (voir figure 1) de la bague 20, destiné à être ceinturé par le collier, sur une longueur suffisante pour accueillir les têtes d'écartement 52A en dehors de ce tronçon axial dans la deuxième position relative de l'écartement et de la bague représentés sur la figure 10. L'écarteur 50 et la bague 20 peuvent être fabriqués sous la forme de pièces indépendantes. Toutefois, comme le montre la figure 11, ces deux éléments peuvent également être fabriqués sous la forme d'une même pièce, dont les deux parties respectivement constituées par l'écarteur et par la bague sont reliées entre elles par des voiles de liaison sécables ou déformables. En particulier, on voit sur la figure 11, la bague 20 et l'écarteur 11 sont reliés dans la région de la coopération entre les têtes d'écartement 52A et les tronçons étroits 26 des fentes 24. Avantageusement, cette liaison est suffisamment fragile pour qu'un déplacement axial relatif des deux éléments 20 et 50 dans le sens indiqué par les flèches de la figure 11 permette de rompre cette liaison et de faire progresser les têtes d'écartement 52A à l'intérieur des portions larges 25 des fentes 24.

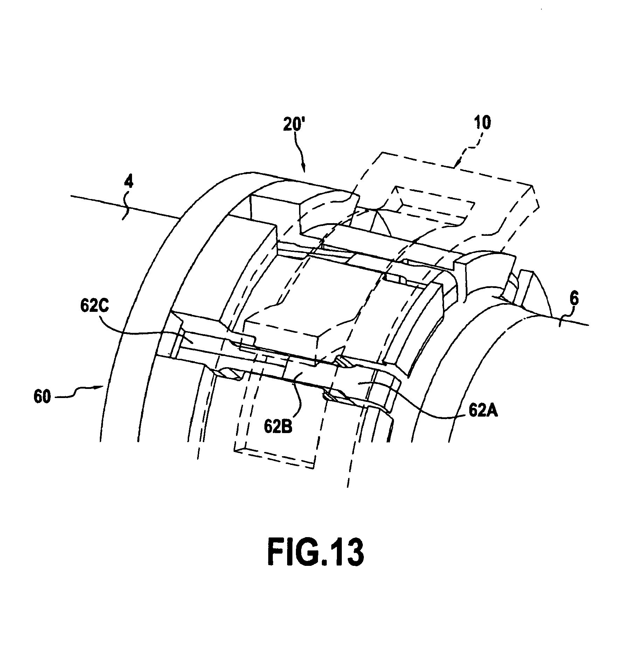

En référence aux figures 12 et 13, on décrit maintenant un troisième mode de réalisation de l'invention. Ce troisième mode de réalisation diffère des précédents par la conformation de l'écarteur 60 et par le fait qu'il est inséré par l'autre extrémité axiale de la bague 20'. En effet, on voit que l'écarteur 60 comprend des pattes axiales 62 qui s'étendent axialement à partir d'un anneau de liaison 64. Ces pattes 62 présentent, à leurs extrémités libres opposées à l'anneau 64, des portions élargies formant des têtes d'écartement 62A, tandis que des portions amincies 62B sont situées entre les têtes d'écartement 62A et la liaison des pattes à l'anneau 64.

Dans la mesure où les fentes 24 de la bague 20' sont traversantes axialement, les pattes axiales 62 sont insérées dans ces fentes du côté de l'anneau 28 contrairement aux modes de réalisation précédemment décrits. Dans ce cas, pour assembler par emmanchement un tuyau et un embout, on insère les pattes 62 dans les fentes 24 jusqu'à ce que les têtes d'écartement 62A se trouvent dans les tronçons étroits 26 des fentes 24'. Il convient de relever que, si cette insertion est opérée par un déplacement axial relatif de la bague et de l'écarteur, on fait avantageusement en sorte que la transition entre les tronçons axiaux d'entrée 25' des fentes et les tronçons étroits 26 soit adoucie par rapport aux épaulements 25'A représentés sur les figures 12 et 13. Les tronçons terminaux 25A des fentes 24', opposés à l'anneau 28 sont formés par des tronçons larges, dont les dimensions sont telles que, lorsque les têtes d'écartement 62A sont disposées dans ces tronçons terminaux, le rétreint de la bague est terminé.

Ainsi, pour réaliser l'emmanchement des deux pièces précitées, on peut mettre le tuyau en place à l'intérieur de la bague 20' alors que celle-ci est maintenue dans sa configuration expansée par la coopération des têtes d'écartement avec les tronçons étroits des fentes 26, puis on amène l'embout du côté de l'anneau 60 de manière à insérer la portion terminale de cet embout à l'intérieur de l'anneau 60 et de la bague 28, dans le sens F indiqué sur la figure 12. Dans cette situation, l'extrémité libre du tuyau coopère avec la surface de butée 28A formée par la face radiale interne de l'anneau 28, tandis que l'épaulement de l'embout coopère avec la surface de butée formée par la face radiale externe 64A de l'anneau 64. Il suffit alors de poursuivre le mouvement d'emmanchement en rapprochant encore l'embout et le tuyau l'un de l'autre, pour réaliser un déplacement axial relatif de la bague 20' et de l'écarteur 60 comme indiqué par les flèches opposées de la figure 12, de manière à amener les têtes d'écartement 62A des pattes dans les tronçons terminaux larges 25A des fentes et permettre ainsi le rétreint de la bague. On constate que dans ce mode de réalisation, la surface de butée 64A de l'écarteur est opposée aux têtes d'écartement 62A. On voit sur la figure 13 que, dans la deuxième position relative de l'écarteur 60 et de la bague 20', les bases 62C des pattes par lesquelles ces dernières sont attachées à l'anneau 64 se trouvent dans les tronçons d'entrée 25' larges des fentes 24, de sorte que seules les régions amincies 62B de ces pattes se trouvent dans les tronçons minces des fentes, de manière à permettre le rétreint de la bague.

La bague de support et l'écarteur sont avantageusement réalisés en moulage par injection. Le matériau utilisé est par exemple du polyamide 66 chargé en fibres de verre.

Comme indiqué précédemment, le collier est quant à lui de préférence réalisé dans un matériau élastique. Il s'agit avantageusement d'acier à ressort.

## Revendications

1. Dispositif de mise en place d'un collier de serrage sur une pièce à serrer, **caractérisé en ce qu'**il comprend une bague de support (20, 20') apte à être ceinturée par le collier (10) et un écarteur (40, 50, 60) apte à coopérer avec ladite bague pour, dans une première position relative stable de l'ecarteur (40, 50, 60) et de la bague (20, 20'), maintenir la bague dans une configuration expansée dans laquelle le collier (10) ceinturant la bague (20, 20') est également dans une configuration expansée dans laquelle le diamètre du collier (10) est augmenté pour permettre la mise en place de ce dernier autour de la pièce à serrer et pour, dans une deuxième position relative de l'écarteur (40, 50, 60) et de la bague (20, 20') permettre le rétreint de la bague (20, 20').

2. Dispositif selon la revendication 1, **caractérisé en ce que** la bague de support (20, 20') et l'écarteur (40, 50, 60) sont aptes à être déplacés axialement l'un par rapport à l'autre pour passer de l'une à l'autre desdites première et deuxième positions relatives, ce déplacement axial étant de préférence opéré dans le sens d'une pénétration de l'écarteur à l'intérieur de la bague.

3. Dispositif selon la revendication 1 ou 2, **caractérisé en ce que** la bague de support (20, 20') comporte au moins un secteur de paroi axiale (22) délimité par une fente axiale (24) et **en ce que** l'écarteur (40, 50, 60) comporte au moins une tête d'écartement (42A, 52A, 62A) apte à être insérée dans ladite fente (24) pour écarter les bords de cette dernière et maintenir la bague dans sa configuration expansée.

4. Dispositif selon la revendication 3, **caractérisé en ce que** la fente (24) présente un tronçon large (25, 25A) et un tronçon étroit (26) disposés l'un à la suite de l'autre en direction axiale et **en ce que** la tête d'écartement (42A, 52A, 62A) est apte à coopérer avec le tronçon étroit pour maintenir la bague dans sa configuration expansée et à coopérer avec le tronçon large pour permettre le rétreint de la bague.

5. Dispositif selon l'une quelconque des revendications 3 et 4, **caractérisé en ce que** la tête d'écartement (42A, 52A, 62A) est formée sur une patte axiale (42, 52, 62) qui présente une portion amincie (42B, 52B, 62B), apte à coopérer avec le tronçon étroit (26) de la fente (24) lorsque la tête d'écartement coopère avec le tronçon large (25, 25A).

6. Système de serrage comprenant un collier de serrage (10) ayant une ceinture (12) apte à adopter une configuration de repos dans laquelle le diamètre de cette ceinture (12) est réduit pour le serrage et une configuration expansée dans laquelle le diamètre de la ceinture (12) est augmenté pour permettre la mise en place du collier (10) autour d'une pièce à serrer, la ceinture (12) pouvant passer de sa configuration expansée à sa configuration de repos par une déformation élastique,
**caractérisé en ce qu'**il comporte, en outre, un dispositif de mise en place du collier (10) selon l'une quelconque des revendications 1 à 5, dans lequel la deuxième position relative de l'écarteur (40, 50, 60) et de la bague (20, 20') permet le rétreint de la bague (20, 20') et le serrage du système de serrage sous l'effet de l'effort de rappel élastique exercé par le collier (10) ceinturant la bague. (20, 20').

7. Système de serrage selon la revendication 6, **caractérisé en ce que** la bague de support (20, 20') est apte à caler le collier qui la ceinture par rapport à elle, en particulier par des épaulements (20A', 20A") délimitant une zone cylindrique.

8. Système de serrage selon la revendication 6 ou 7, pour serrer un assemblage de deux pièces (4, 6) emmanchées l'une dans l'autre, **caractérisé en ce que** l'un des deux éléments formés par la bague de support et par l'écarteur (40, 50) présente une portion de maintien (49) apte à être disposée sur l'une (6) des deux pièces de l'assemblage pour permettre le maintien du système de serrage par rapport à cette pièce, avant son assemblage avec l'autre pièce.

9. Système de serrage selon l'une quelconque des revendications 6 à 8, pour serrer un assemblage de deux pièces (4, 6) emmanchées l'une dans l'autre, dans lequel le dispositif de mise en place du collier est selon la revendication 2 et l'une quelconque des revendications 2 à 5, **caractérisé en ce que** la bague de support (20, 20') et l'écarteur (40, 50, 60) présentent chacun une surface de butée (28A ; 48A ; 58A ; 64A) apte à coopérer respectivement avec chacune des deux pièces de telle sorte qu'un déplacement relatif desdites pièces pour leur emmanchement, alors que le système de serrage est disposé autour de l'une de ces pièces, provoque le passage de la première position relative à la deuxième position relative de la bague de support et de l'écarteur.

10. Système de serrage selon la revendication 9, dans lequel le dispositif de mise en place du collier est selon l'une quelconque des revendications 3 à 5, **caractérisé en ce que** la surface de butée (48A, 58A) de l'écarteur est formée sur au moins une portion d'anneau (48, 58) de l'écarteur (40, 50) située dans la région de la tête d'écartement (42A, 52A).

11. Système de serrage selon la revendication 9 ou 10, dans lequel le dispositif de mise en place du collier est selon l'une quelconque des revendications 3 à 5, **caractérisé en ce que** la surface de butée (28A) de la bague de support (20, 20') est formé sur au moins une portion d'anneau (28) de la bague de support (20, 20') située au voisinage d'une extrémité du secteur de paroi axiale (22) opposée à l'écarteur (40, 50, 60).

12. Système de serrage selon la revendication 8 et l'une quelconque des revendications 6 à 11, dans lequel le dispositif de mise en place du collier est selon l'une quelconque des revendications 3 à 5, **caractérisé en ce que** la portion de maintien (49) est formée dans une région de l'écarteur (40, 50) opposée à la tête d'écartement (42A).

13. Système de serrage selon l'une quelconque des revendications 6 à 12, dans lequel le dispositif de mise en place du collier est selon l'une quelconque des revendications 3 à 5, **caractérisé en ce que** la fente axiale (24) s'étend au moins sur un tronçon axial (20A) de la bague de support (20', 20') qui est recouvert par la ceinture (12) du collier (10) lorsque ce dernier ceinture ladite bague.

14. Système de serrage selon la revendication 13, dans lequel le dispositif de mise en place du collier est selon la revendication 4 ou les revendications 4 et 5, **caractérisé en ce que** le tronçon large (25) de la fente axiale (24) s'étend au-delà dudit tronçon axial de la bague de support sur une longueur suffisante pour accueillir les têtes d'écartement (52) en dehors dudit tronçon axial dans la deuxième position relative de l'écarteur (50) et de la bague (20).

15. Système de serrage selon l'une quelconque des revendications 6 à 14, **caractérisé en ce que** le collier (10) est formé dans un matériau en bande formant ressort, enroulé sur lui-même de manière à présenter deux extrémités (14, 16) qui se chevauchent axialement et qui sont aptes à être déplacées l'une par rapport à l'autre pour réduire la longueur de chevauchement et amener le collier de sa configuration de repos à sa configuration expansée.

## Patentansprüche

1. Vorrichtung zum Anbringen einer Klemmschelle an einem festzuklemmenden Teil, **dadurch gekennzeichnet, dass** sie einen Tragring (20, 20'), der geeignet ist, von der Schelle (10) umgriffen zu werden, und einen Spreizer (40, 50, 60) umfasst, der geeignet ist, mit dem Ring zusammenzuwirken, um in einer ersten stabilen Relativposition des Spreizers (40, 50, 60) und des Rings (20, 20') den Ring in einer aufgeweiteten Form zu halten, in der die den Ring (20, 20') umgreifende Schelle (10) sich ebenfalls in einer aufgeweiteten Form befindet, in welcher der Durchmesser der Schelle (10) vergrößert ist, um das Anbringen letzterer um das festzuklemmende Teil herum zu ermöglichen, und um in einer zweiten Relativposition des Spreizers (40, 50, 60) und des Rings (20, 20') das Zuziehen des Rings (20, 20') zu ermöglichen.

2. Vorrichtung nach Anspruch 1, **dadurch gekennzeichnet, dass** der Tragring (20, 20') und der Spreizer (40, 50, 60) geeignet sind, axial zueinander bewegt zu werden, um von der einen zu der anderen der ersten und zweiten Relativpositionen zu gelangen, wobei diese Axialbewegung vorzugsweise im Sinne eines Eindringens des Spreizers in den Ring vollzogen wird.

3. Vorrichtung nach Anspruch 1 oder 2, **dadurch gekennzeichnet, dass** der Tragring (20, 20') wenigstens ein durch einen axialen Schlitz (24) begrenztes Axialwandsegment (22) umfasst und dass der Spreizer (40, 50, 60) wenigstens einen Spreizkopf (42A, 52A, 62A) umfasst, der geeignet ist, in den Schlitz (24) eingefügt zu werden, um die Ränder des letzteren zu spreizen und den Ring in seiner aufgeweiteten Form zu halten.

4. Vorrichtung nach Anspruch 3, **dadurch gekennzeichnet, dass** der Schlitz (24) einen breiten Abschnitt (25, 25A) und einen schmalen Abschnitt (26), die in axialer Richtung nacheinander angeordnet sind, aufweist, und dass der Spreizkopf (42A, 52A, 62A) geeignet ist, mit dem schmalen Abschnitt zusammenzuwirken, um den Ring in seiner aufgeweiteten Form zu halten, und mit dem breiten Abschnitt zusammenzuwirken, um das Zuziehen des Rings zu ermöglichen.

5. Vorrichtung nach einem der Ansprüche 3 und 4, **dadurch gekennzeichnet, dass** der Spreizkopf (42A, 52A, 62A) an einer axialen Lasche (42, 52, 62) ausgebildet ist, die einen verjüngten Abschnitt (42B, 52B, 62B) aufweist, der geeignet ist, mit dem schmalen Abschnitt (26) des Schlitzes (24) zusammenzuwirken, wenn der Spreizkopf mit dem breiten Abschnitt (25, 25A) zusammenwirkt.

6. Klemmsystem, umfassend eine Klemmschelle (10) mit einem Ring (12), der geeignet ist, eine Ruheform, in der der Durchmesser dieses Rings (12) für das Festklemmen reduziert ist, und eine aufgeweitete Form anzunehmen, in der der Durchmesser des Rings (12) vergrößert ist, um das Anbringen der Schelle (10) um ein festzuklemmendes Teil herum zu ermöglichen, wobei der Ring (12) durch eine elastische Verformung von seiner aufgeweiteten Form in seine Ruheform übergehen kann,
**dadurch gekennzeichnet, dass** es ferner eine Vorrichtung zum Anbringen der Schelle (10) nach einem der Ansprüche 1 bis 5 umfasst, wobei die zweite Relativposition des Spreizers (40, 50, 60) und des Rings (20, 20') das Zuziehen des Rings (20, 20') und das Festklemmen des Klemmsystems unter der Wirkung der elastischen Rückstellkraft, welche durch die den Ring (20, 20') umgreifende Schelle (10) ausgeübt wird, ermöglicht.

7. Klemmsystem nach Anspruch 6, **dadurch gekennzeichnet, dass** der Tragring (20, 20') geeignet ist, die ihn umgreifende Schelle ihm gegenüber festzukeilen, insbesondere durch einen zylindrischen Bereich begrenzende Schultern (20A', 20A").

8. Klemmsystem nach Anspruch 6 oder 7, um eine Anordnung aus zwei ineinander gesteckten Teilen (4, 6) festzuklemmen, **dadurch gekennzeichnet, dass** eines der beiden durch den Tragring und durch den Spreizer (40, 50) gebildeten Elemente, einen Halteabschnitt (49) aufweist, der geeignet ist, an einem (6) der beiden Teile der Anordnung angeordnet zu werden, um das Halten des Klemmsystems gegenüber diesem Teil vor seinem Verbinden mit dem anderen Teil zu ermöglichen.

9. Klemmsystem nach einem der Ansprüche 6 bis 8, um eine Anordnung aus zwei ineinander gesteckten Teilen (4, 6) festzuklemmen, wobei die Vorrichtung zum Anbringen der Schelle gemäß Anspruch 2 und einem der Ansprüche 2 bis 5 ist, **dadurch gekennzeichnet, dass** der Tragring (20, 20') und der Spreizer (40, 50, 60) jeweils eine Anschlagfläche (28A; 48A; 58A; 64A) aufweisen, die geeignet ist, jeweils mit jedem der beiden Teile derart zusammenzuwirken, dass eine Relativbewegung der Teile für ihr Einstecken, während das Klemmsystem um eines dieser Teile herum angeordnet ist, den Übergang von der ersten Relativposition in die zweite Relativposition des Tragrings und des Spreizers bewirkt.

10. Klemmsystem nach Anspruch 9, wobei die Vorrichtung zum Anbringen der Schelle gemäß einem der Ansprüche 3 bis 5 ist, **dadurch gekennzeichnet, dass** die Anschlagfläche (48A, 58A) des Spreizers an wenigstens einem Ringabschnitt (48, 58) des Spreizers (40, 50) ausgebildet ist, der im Bereich des Spreizkopfes (42A, 52A) gelegen ist.

11. Klemmsystem nach Anspruch 9 oder 10, wobei die Vorrichtung zum Anbringen der Schelle gemäß einem der Ansprüche 3 bis 5 ist, **dadurch gekennzeichnet, dass** die Anschlagfläche (28A) des Tragrings (20, 20') an wenigstens einem Ringabschnitt (28) des Tragrings (20, 20') ausgebildet ist, der in der Nähe eines von dem Spreizer (40, 50, 60) abgewandten Endes des Axialwandsegments (22) gelegen ist.

12. Klemmsystem nach Anspruch 8 und einem der Ansprüche 6 bis 11, wobei die Vorrichtung zum Anbringen der Schelle gemäß einem der Ansprüche 3 bis 5 ist, **dadurch gekennzeichnet, dass** der Halteabschnitt (49) in einem von dem Spreizkopf (42A) abgewandten Bereich des Spreizers (40, 50) ausgebildet ist.

13. Klemmsystem nach einem der Ansprüche 6 bis 12, wobei die Vorrichtung zum Anbringen der Schelle gemäß einem der Ansprüche 3 bis 5 ist, **dadurch gekennzeichnet, dass** der axiale Schlitz (24) sich wenigstens über einen axialen Abschnitt (20A) des Tragrings (20, 20') erstreckt, der durch den Ring (12) der Schelle (10) bedeckt ist, wenn letztere den Ring umgreift.

14. Klemmsystem nach Anspruch 13, wobei die Vorrichtung zum Anbringen der Schelle gemäß Anspruch 4 oder den Ansprüchen 4 und 5 ist, **dadurch gekennzeichnet, dass** der breite Abschnitt (25) des axialen Schlitzes (24) sich über den axialen Abschnitt des Tragrings hinaus über eine Länge erstreckt, die ausreichend ist, um die Spreizköpfe (52A) außerhalb des axialen Abschnitts in der zweiten Relativposition des Spreizers (50) und des Rings (20) aufzunehmen.

15. Klemmsystem nach einem der Ansprüche 6 bis 14, **dadurch gekennzeichnet, dass** die Schelle (10) aus einem streifenförmigen, federnden Material ausgebildet ist, das um sich selbst gewickelt ist, so dass es zwei Enden (14, 16) aufweist, die sich axial überlappen und die geeignet sind, zueinander bewegt zu werden, um die Überlappungslänge zu reduzieren und die Schelle von ihrer Ruheform in ihre aufgeweitete Form zu bringen.

## Claims

1. A device for putting a clamping collar into place on a part to be clamped, said device being **characterized in that** it comprises a support ring (20, 20') suitable for being encircled by the collar (10), and an expander (40, 50, 60) suitable for co-operating with said ring firstly to hold the ring in an expanded configuration in which the collar (10) encircling the ring (20, 20') is also in its expanded configuration in which the diameter of the collar is increased to enable said collar to be put into place around the part to be clamped when the expander (40, 50, 60) and the ring (20, 20') are in a stable first relative position, and secondly to enable the ring (20, 20') to contract when the expander (40, 50, 60) and the ring (20, 20') are in a second relative position.

2. A device according to claim 1, **characterized in that** the support ring (20, 20') and the expander (40, 50, 60) are suitable for being moved axially relative to each other so as to go from one to the other of said first and second relative positions, this axial movement preferably being effected in the a direction in which the expander penetrates into the ring.

3. A device according to claim 1 or claim 2, **characterized in that** the support ring (20, 20') has at least one axial wall sector (22) defined by an axial slot (24) and **in that** the expander (40, 50, 60) has at least one spreader head (42A, 52A, 62A) suitable for being inserted into said slot (24) so as to spread apart the edges of said slot and so as to hold the ring in its expanded configuration.

4. A device according to claim 3, **characterized in that** the slot (24) has a wide segment (25, 25A) and a narrow segment (26) that are disposed one after the other in the axial direction and **in that** the spreader head (42A, 52A, 62A) is suitable for co-operating with the narrow segment to hold the ring in its expanded configuration and to cooperate with the wide segment to enable the ring to contract.

5. A device according to any one of claim 3 and claim 4, **characterized in that** the spreader head (42A, 52A, 62A) is formed on an axial stave (42, 52, 62) that has a thin portion (42A, 52B, 62B) suitable for co-operating with the narrow segment (26) of the slot (24) while the spreader head is co-operating with the wide segment (25, 25A).

6. A clamping system comprising a clamping collar (10) having a belt (12) suitable for taking up a rest configuration in which the diameter of said belt (12) is small for clamping purposes, and an expanded position in which the diameter of the belt (12) is increased so as to enable the collar (10) to be put into place around a part to be clamped, it being possible for the belt (12) to go from its expanded configuration to its rest configuration by elastic deformation;
said clamping system being **characterized in that** it further comprises a device for putting the collar (10) into place according to any one of claims 1 to 5, wherein the second relative position of the expander (40, 50, 60) and the ring (20, 20') enables the ring (20, 20') to contract and the clamping system to tighten under the resilient return force exerted by the collar (10) encircling the ring (20, 20').

7. A clamping system according to claim 6, **characterized in that** the support ring (20, 20') is suitable for setting the collar that is encircling it relative to it, in particular via shoulders (20A', 20A") defining a cylindrical zone.

8. A clamping system according to claim 6 or claim 7, for clamping an assembly of two parts (4, 6) engaged one in the other, said clamping system being **characterized in that** one of the two elements formed by the support ring and by the expander (40, 50) has a holding portion (49) suitable for being disposed on one (6) of the two parts of the assembly so as to make it possible to hold the clamping system relative to said part, before said part is assembled with the other part.

9. A clamping system according to any one of claims 6 to 8, for clamping an assembly of two parts (4, 6) that are engaged one in the other, wherein the device for putting the collar into place is according to claim 2 and any one of claims 2 to 5, said clamping system being **characterized in that** the support ring (20, 20') and the expander (40, 50, 60) each have an abutment surface (28A; 48A; 58A; 64A) suitable for co-operating with a respective one of the two parts so that relative movement of said parts for engaging one in the other, while the clamping system is disposed around one of said parts, causes the support ring and the expander to go from their first relative position to their second relative position.

10. A clamping system according to claim 9, wherein the device for putting the collar into place is according to any one of claims 3 to 5, **characterized in that** the abutment surface (48A, 58A) of the expander is formed over at least a band portion (48, 58) of the expander (40, 50) that is situated in the region of the spreader head (42A, 52A).

11. A clamping system according to claim 9 or claim 10, wherein the device for putting the collar into place is according to any one of claims 3 to 5, **characterized in that** the abutment surface (28A) of the support ring (20, 20') is formed on at least a band portion (28) of the support ring (20, 20') that is situated in the vicinity of an end of the axial wall sector (22) that is opposite from the expander (40, 50, 60).

12. A clamping system according to claim 8, and to any one of claims 6 to 11, wherein the device for putting the collar into place is according to any one of claims 3 to 5, **characterized in that** the holding portion (49) is formed in a region of the expander (40, 50) that is opposite from the spreader head (42A).

13. A clamping system according to any one of claims 6 to 12, wherein the device for putting the collar into place is according to any one of claims 3 to 5, **characterized in that** the axial slot (24) extends at least over an axial segment (20A) of the support ring (20', 20') that is covered by the belt (12) of the collar (10) when said collar encircles said ring.

14. A clamping collar according to claim 13, wherein the device for putting the collar into place is according to claim 4 or to claims 4 and 5, **characterized in that** the wide segment (25) of the axial slot (24) extends beyond said axial segment of the support ring over a length sufficient to accommodate the spreader heads (52A) outside said axial segment when the expander (50) and the ring (20) are in the second relative position.

15. A clamping system according to any one of claims 6 to 14, **characterized in that** the collar (10) is made of a spring-forming strip material that is looped on itself in such a manner as to have two ends (14, 16) that overlap axially and that are suitable for being moved one relative to the other so as to reduce the overlap length and so as to bring the collar from its rest configuration to its expanded configuration.
